# EUROPÄISCHE PATENTSCHRIFT

(11) **EP 1 663 742 B1**
(45) Veröffentlichungstag und Bekanntmachung des Hinweises auf die Patenterteilung: **27.02.2013**
(21) Anmeldenummer: 04735726.4
(22) Anmeldetag: 02.06.2004
(51) Int. Cl.: B60S 1/34

(54) **EINRICHTUNG ZUM AB- UND ANKLAPPEN EINES WISCHARMS EINER SCHEIBENWISCHVORRICHTUNG AN EINER KRAFTFAHRZEUGSCHEIBE UND VERFAHREN ZUM HERSTELLEN DER EINRICHTUNG**
DEVICE FOR SWINGING A WIPER ARM OF A WINDSCREEN WIPER ASSEMBLY AWAY FROM AND AGAINST A MOTOR VEHICLE WINDSCREEN AND METHOD FOR PRODUCING THE DEVICE
DISPOSITIF DESTINE A RABATTRE ET A APPLIQUER UN BRAS DE MONTURE D'ESSUIE-GLACE D'UN SYSTEME D'ESSUIE-GLACE SUR UNE VITRE D'UN VEHICULE A MOTEUR ET PROCEDE POUR PRODUIRE LE DISPOSITIF

(30) Priorität: 09.09.2003 DE 10341457
(43) Veröffentlichungstag der Anmeldung: 07.06.2006
(73) Patentinhaber: ROBERT BOSCH GMBH, 70442 Stuttgart (DE)
(72) Erfinder: ZIMMER, Joachim, 77880 Sasbach (DE); WEILER, Michael, 363-9 Chungchongbuk-Do (KR)
(86) Internationale Anmeldenummer: PCT/DE2004/001124
(87) Internationale Veröffentlichungsnummer: WO 2005/025955

(56) Entgegenhaltungen:
- EP-A- 0 299 708
- EP-A- 0 728 640
- DE-A- 10 052 616
- US-A- 3 387 316
- PATENT ABSTRACTS OF JAPAN Bd. 2003, Nr. 05, 12. Mai 2003 (2003-05-12) & JP 2003 025962 A (JIDOSHA DENKI KOGYO CO LTD), 29. Januar 2003 (2003-01-29)

## Beschreibung

Die Erfindung betrifft eine Einrichtung zum Ab- und Anklappen eines Wischarms einer Scheibenwischvorrichtung an eine Scheibe eines Kraftfahrzeuges, wobei die Einrichtung mindestens zwei Federelemente aufweist, die den Wischarm in einer stabilen von der Fahrzeugscheibe weggeklappten Position halten, und die den Wischarm im Wischbetrieb gegen die Fahrzeugscheibe drücken.

Aus dem Stand der Technik sind gelenkfreie Wischarme bekannt, die anstelle eines Gelenkes mit der eingangs genannten Einrichtung ausgerüstet sind. Dabei unterscheidet man im wesentlichen zwei Bauformen. Eine erste Bauform weist zwei nebeneinander angeordnete Federelemente auf. Die beiden Federelemente sind mit ihrem einen Ende V-förmig an einem gemeinsamen einteiligen Verbindungselementes angeordnet. Ein Teil eines zweiteiligen Verbindungselementes ist jeweils am anderen Ende eines der Federelemente angebracht. Bei der Montage werden die V-förmig angeordneten Federelemente gegeneinander gedrückt, und die beiden Teile des zweiteiligen Verbindungselements durch ein Befestigungsmittel, beispielsweise durch einen Niet, miteinander befestigt. Durch das Gegeneinanderdrücken der V-förmig zueinander angeordneten Federelemente entseht in den Federelementen eine Torsionskraft. Diese Torsionskraft hat ein Verschwenkmoment zur Folge, so dass ein mit einer solchen Einrichtung ausgestatteter Wischarm von der Scheibe weggeklappt oder an die Scheibe hingeklappt werden. Nachteilig ist jedoch bei diesen aus dem Stand der Technik bekannten Einrichtungen, dass sie relativ aufwändig zu montieren sind und einen relativ hohen Werkzeugverschleiß und Materialverschnitt zur Folge haben.

Bei einer zweiten Bauform sind drei Federelemente nebeneinander angeordnet. Dabei ist entweder das mittlere Federelement länger als die beiden äußeren oder die beiden äußeren Federelemente sind länger als das mittlere Federelement. Die drei Federelemente weisen an ihren beiden Enden jeweils ein gemeinsames Verbindungselement auf, wobei ein Verbindungselement einteilig mit den Federelementen verbunden ist, und das zweite Verbindungselement in einem Extramontageschritt an den Federelementen befestigt werden muss. Bei der Befestigung des längeren Federelementes mit dem Verbindungselement muss das längere Federelement gebogen werden. Dieses gebogene Federelement hat ebenfalls ein Verschwenkmoment zur Folge, so dass ein mit dieser Einrichtung ausgestatteter Wischarm von der Scheibe weggeklappt oder an die Scheibe hingeklappt werden kann. Auch diese aus dem Stand der Technik bekannte zweite Bauform hat den Nachteil, dass sie einen relativ hohen Montageaufwand, einen relativ hohen Werkzeugverschleiß und Materialverschnitt verursacht.

Aus EP 0 299 708 A2 ist eine Einrichtung zum Ab- und Anklappen eines Wischarmes einer Scheibenwischvorrichtung an einer Scheibe eines Kraftfahrzeugs bekannt. Die Einrichtung weist zwei Arme auf, wobei die Einrichtung den Wischarm in einer stabilen, von der Fahrzeugscheibe weggeklappten Position halten und wobei die Einrichtung im Wischbetrieb den Wischarm gegen die Fahrzeugscheibe drückt. Der Arm besteht aus einer einteiligen Struktur und kann vorzugsweise durch Spritzen, Gießen, Pressen oder auf andere Weise hergestellt werden. Beispielsweise wird der Arm aus einem Epoxid- oder Polyesterharz gefüllt mit Glasfasern hergestellt.

Die Erfindung hat die Aufgabe, eine Einrichtung der eingangs genannten Art dahingehend zu verbessern, dass zukünftig die Montage vereinfacht, der Werkzeugverschleiß und der Materialverschnitt reduziert werden.

Die Erfindung löst die gestellte Aufgabe durch eine Einrichtung der eingangs genannten Art, bei der erfindungsgemäß mindestens eines der mindestens zwei Federelemente mindestens einen gequetschten Bereich aufweist. Somit wird zukünftig die Einrichtung als ein einziges Teil aus einem Blech herausgestanzt, wobei die Federelemente an beiden Enden fest mit den die Federelemente verbindenden Verbindungselementen verbunden sind. Die Federelemente müssen also jetzt nicht mehr durch den bisher erforderlichen Extramontageschritt an einem ihrer Enden mit dem Verbindungselement befestigt werden. Um das für die Funktion der Einrichtung erforderliche Verschwenkmoment zu erzeugen, wird mindestens eines der mindestens zwei Federelemente in einem ausgewählten Bereich gequetscht. Dabei bestimmt das Maß der Quetschung die Höhe des gewünschten Verschwenkmomentes oder der gewünschten Anpresskraft des Wischarms gegen die Fahrzeugscheibe. Sinnvollerweise befinden sich die gequetschten Bereiche am Ende der Federelemente, da in der Mitte der Federelemente höhere Spannungen durch die Biegebelastung auftreten. Da die Einrichtung zukünftig als ein einziges Teil aus dem Blech herausgestanzt wird, und die Federelemente nicht mehr V-förmig abstehen, fällt zukünftig weniger Materialverschnitt an. Folglich werden der Materialverschnitt und auch der Werkzeugverschleiß deutlich reduziert.

Bei einer bevorzugten Ausführungsform weist die Einrichtung zwei nebeneinander angeordnete Federelemente auf, die jeweils an ihren Endbereichen durch Verbindungselemente miteinander verbunden sind, wobei mindestens ein Endbereich der Einrichtung und jeweils ein Teilbereich der Verbindungselemente gequetscht sind. Somit wird durch die Quetschung in mindestens einem Endbereich der Federelemente und in einem Teilbereich der Verbindungselemente eine Kraft erzeugt, die bestrebt ist die beiden Federelemente zu spreizen. Da jedoch die Federelemente an ihren beiden Enden fest mit den Verbindungselementen verbunden sind, entsteht in den Federelementen eine Torsionskraft, die wiederum ein Verschwenkmoment erzeugt. Somit ist ein Verschwenken eines mit der Einrichtung ausgerüsteten Wischarms in eine stabile von der Fahrzeugscheibe weggeklappte Position möglich. Wenn der Wischarm aus der weggeklappten Position zur Scheibe hin verschwenkt wird, wird er über einen kritischen Punkt an dem das Verschwenkmoment in die entgegengesetzte Wirkrichtung umgedreht wird, verschwenkt. Dann wird der mit der erfindungsgemäßen Einrichtung ausgerüstete Wischarm gegen die Scheibe gepresst, wodurch eine optimale Wischleistung erzielt wird.

In einer weiteren Ausführungsform der Einrichtung weist der Wischarm drei nebeneinander angeordnete Federelemente auf, wobei ein mittleres Federelement mit mindestens einem gequetschten Endbereich versehen ist. Alternativ ist es auch möglich, dass der Wischarm drei nebeneinander angeordnete Federelemente aufweist, wobei zwei außen angeordnete Federelemente mit mindestens einem gequetschten Endbereich versehen sind. Es ist also auch möglich, dass das den gequetschten Endbereich aufweisende Federelement auch noch einen zweiten gequetschten Endbereich aufweist, um das Verschwenkmoment oder die Anpresskraft des Wischarms an die Fahrzeugscheibe zu erhöhen. Auch bei dieser weiteren Ausführungsform kann die Einrichtung aus einem Blechteil herausgestanzt werden, wobei die Federelemente in ihren Endbereichen fest mit den Verbindungselementen verbunden sind. Durch den Quetschvorgang werden die betreffenden Federelemente verlängert, so dass das gequetschte oder die gequetschten Federelemente der Einrichtung das erforderliche Verschwenkmoment verleihen, um den mit der Einrichtung versehenen Wischarm von der Scheibe wegklappen oder an die Fahrzeugscheibe hinklappen zu können. Auch bei dieser weiteren Ausführungsform gibt es einen kritischen Punkt zwischen der von der Scheibe weggeklappten Position und der an die Scheibe angeklappten Position des Wischarms. An diesem kritischen Punkt wird die Wirkrichtung des Verschwenkmoments umgedreht.

Zweckmäßigerweise kann die Einrichtung aus einem Blech mit konstantem Querschnitt hergestellt werden. Somit kann die Einrichtung in einem kontinuierlichen Fertigungsprozess aus einem auf einem Coil aufgewickelten Blechband herausgestanzt werden. Folglich ist es vorteilhaft die erfindungsgemäße Einrichtung in einem automatisierten Fertigungsprozess herzustellen, in dem die gequetschten Bereiche nach einem Vorstanzvorgang oder nach dem Ausstanzvorgang erzeugt werden.

Ferner betrifft die Erfindung einen Wischarm für eine Scheibenwischvorrichtung eines Kraftfahrzeuges, der erfindungsgemäß eine Einrichtung nach einem der Ansprüche 1 bis 4 aufweist.

Die Erfindung betrifft außerdem eine Scheibenwischvorrichtung für ein Kraftfahrzeug, das erfindungsgemäß mindestens einen Wischarm nach Anspruch 5 aufweist.

Die Erfindung betrifft Zuletzt auch ein Herstellverfahren nach Anspruch 7.

Nachfolgend werden Ausführungsbeispiele der erfindungsgemäßen Einrichtung anhand der beiliegenden Zeichnungen näher erläutert.

Im Einzelnen zeigen:
- Fig. 1: eine perspektivische Ansicht auf eine erste Ausführungsform der Einrichtung;
- Fig. 2: einen Schnitt der Einrichtung aus Fig. 1 entlang der Linie A-A;
- Fig. 3: eine perspektivische Ansicht auf eine zweite Ausführungsform der Einrichtung;
- Fig. 4: eine Detailansicht eines gequetschten Bereiches der Einrichtung aus Fig. 3;
- Fig. 5: eine perspektivische Ansicht auf eine dritte Ausführungsform der Einrichtung;
- Fig. 6: einen gequetschten Bereich der Einrichtung aus Fig. 5.

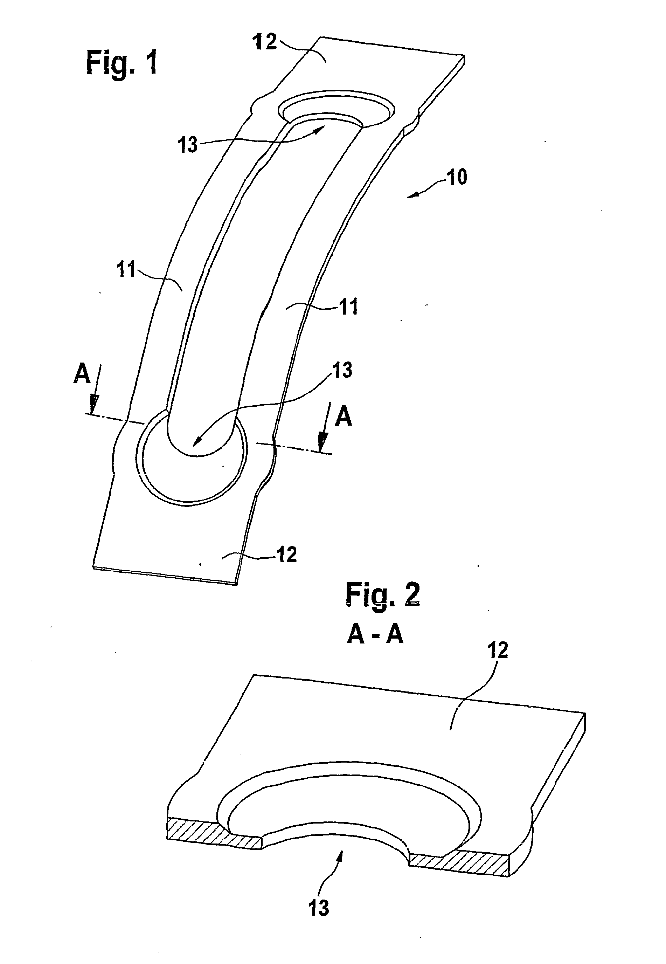

Fig. 1 zeigt eine Einrichtung 10 eines hier nicht näher dargestellten Wischarms einer Scheibenwischvorrichtung eines Kraftfahrzeuges. Die Einrichtung 10 weist zwei Federelemente 11 auf, die jeweils an Verbindungselementen 12 miteinander verbunden sind. Die Einrichtung 10 weist in ihren beiden Endbereichen einen gequetschten Bereich 13 auf, in dem jeweils ein Endbereich der Federelemente 11 und ein Teilbereich der Verbindungselemente 12 gequetscht ist (siehe auch Fig. 2). Durch die Quetschung im Endbereich 13 wird auf die Federelemente 11 eine Spreizkraft ausgeübt, die bestrebt ist die Federelemente 11 im Endbereich 13 auseinander zu spreizen. Da jedoch die Federelemente 11 fest mit den Verbindungselementen 12 verbunden sind, können sich die Federelemente 11 nicht auseinander spreizen, so dass sie, um der Spreizkraft auszuweichen, tordieren. Die in den Federelementen 11 wirkende Torsionskraft erzeugt in der Einrichtung 10 ein Verschwenkmoment, wodurch ein mit der Einrichtung 10 versehener Wischarm von einer Fahrzeugscheibe weggeklappt werden kann oder für den Wischbetrieb an die Fahrzeugscheibe hingedrückt werden kann.

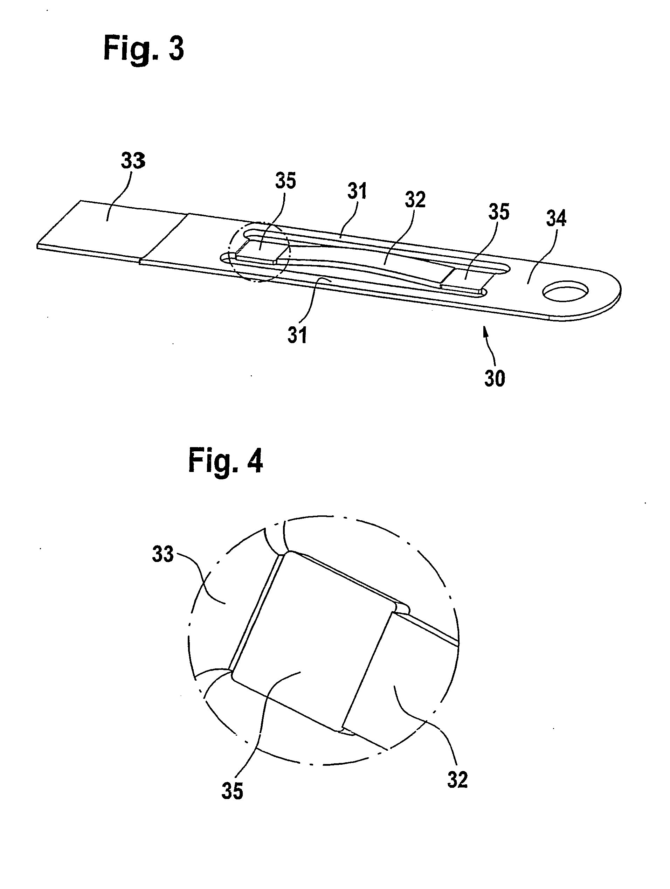

Die Fign. 3 und 4 zeigen eine Einrichtung 30 mit zwei Federelementen 31 und einem Federelement 32. Die Federelemente 31 und 32 sind miteinander an einem Verbindungselement 33 und 34 verbunden. Das Federelement 32 weist an seinen Enden einen gequetschten Bereich 35 auf. Durch den gequetschten Bereich 35 erfährt das Federelement 32 eine Verlängerung. Da das verlängerte Federelement 32 an seinen beiden Enden fest mit den Verbindungselementen 33 und 34 verbunden ist, wird das Federelement 32 durch die Verlängerung gebogen, und verleiht der Einrichtung 30 somit ein Verschwenkmoment. Durch dieses Verschwenkmoment kann ein mit der Einrichtung 30 ausgestatteter Wischarm von einer Fahrzeugscheibe abgeklappt oder für den Wischbetrieb an die Fahrzeugscheibe hingeklappt werden.

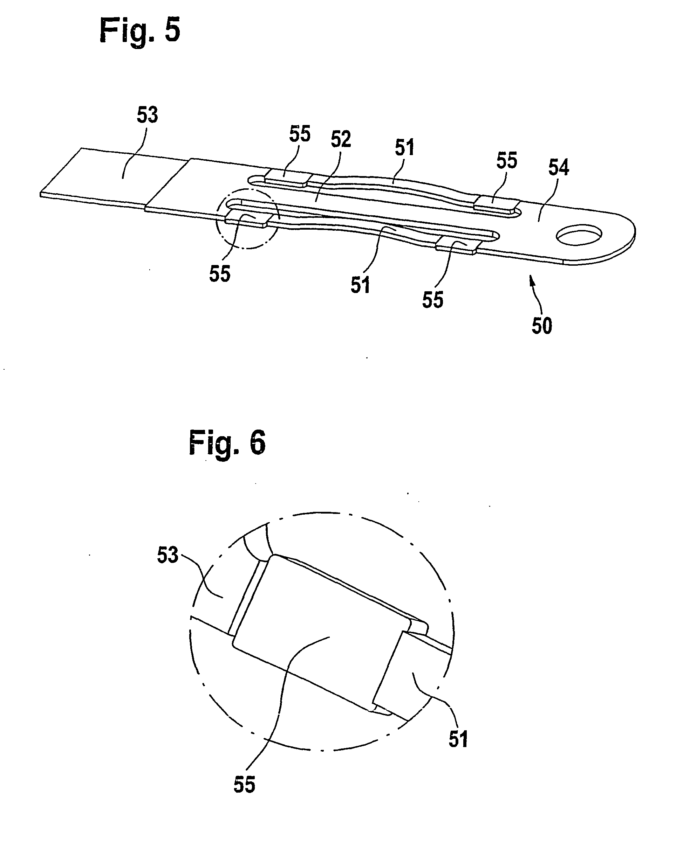

Die Fign. 5 und 6 zeigen eine dritte Ausführungsform einer Einrichtung 50. Die Einrichtung 50 weist Federelemente 51 und 52 auf, die jeweils an Verbindungselementen 53 und 54 angebunden sind. Die Federelemente 51 besitzen an ihren Enden gequetschte Bereiche 55. Durch die gequetschten Bereiche 55 werden die Federelemente 51 verlängert, so dass sie durchgebogen werden und der Einrichtung 50 ebenfalls ein Verschwenkmoment verleihen. Somit kann ein mit der Einrichtung 50 ausgerüsteter Wischarm von der Scheibe weggeklappt oder für den Wischbetrieb an die Fahrzeugscheibe hingeklappt werden.

## Patentansprüche

1. Einrichtung (10, 30, 50) zum Ab- und Anklappen eines Wischarms einer Scheibenwischvorrichtung an eine Scheibe eines Kraftfahrzeuges, wobei die Einrichtung (10, 30, 50) mindestens zwei Federelemente (11, 31, 32, 51, 52) aufweist, die den Wischarm in einer stabilen von der Fahrzeugscheibe weggeklappten Position halten, und die den Wischarm im Wischbetrieb gegen die Fahrzeugscheibe drücken, **dadurch gekennzeichnet, dass** die Einrichtung (10, 30, 50) als ein einziges Teil aus einem Blech herausgestanzt ist, wobei mindestens eines der mindestens zwei Federelemente (11, 31, 32, 51, 52) in einem ausgewählten Bereich einen gequetschten Bereich (13, 35, 55) aufweist, um ein für die Funktion der Einrichtung erforderliches Verschwenkmoment zu erzeugen, wobei der ausgewählte Bereich im Endbereich des Federelements liegt, wobei die Endbereiche der zwei Federelemente über ein Verbindungselement (12, 54) miteinander verbunden sind.

2. Einrichtung (10) nach Anspruch 1, **dadurch gekennzeichnet, dass** sie zwei nebeneinander angeordnete Federelemente (11) aufweist, die jeweils an ihren Endbereichen durch Verbindungselemente (12) miteinander verbunden sind, wobei mindestens ein Endbereich (13)der Einrichtung (10) und jeweils ein Teilbereich der Verbindungselemente (12) gequetscht sind.

3. Einrichtung (30) nach Anspruch 1, **dadurch gekennzeichnet, dass** sie drei nebeneinander angeordnete Federelemente (31, 32) aufweist, wobei ein mittleres Federelement (32) mit mindestens einem gequetschten Endbereich (35) versehen ist.

4. Einrichtung (50) nach Anspruch 1, **dadurch gekennzeichnet, dass** sie drei nebeneinander angeordnete Federelemente (51, 52) aufweist, wobei zwei außen angeordnete Federelemente (51) mit mindestens einem gequetschten Endbereich (55) versehen sind.

5. Wischarm für eine Scheibenwischvorrichtung eines Kraftfahrzeuges, **dadurch gekennzeichnet, dass** er eine Einrichtung (10, 30, 50) nach einem der Ansprüche 1 bis 4 aufweist.

6. Scheibenwischvorrichtung für ein Kraftfahrzeug, **dadurch gekennzeichnet, dass** sie mindestens einen Wischarm nach Anspruch 5 aufweist.

7. Verfahren zum Herstellen einer Einrichtung (10, 30, 50) zum Ab- und Anklappen eines Wischarmes einer Scheibenwischvorrichtung an eine Scheibe eines Kraftfahrzeugs, wobei die Einrichtung (10, 30, 50) mindestens zwei Federelemente (11, 31, 32, 51, 52) aufweist, die geeignet sind, den Wischarm in einer stabilen von der Fahrzeugscheibe weggeklappten Position zu halten und den Wischarm im Wischbetrieb gegen die Fahrzeugscheibe zu drücken, **dadurch gekennzeichnet, dass** die Einrichtung (10, 30, 50) als ein einziges Teil aus einem Blech herausgestanzt wird, wobei die Federelemente an beiden Enden fest mit den die Federelemente verbindenden Verbindungselementen verbunden sind, wobei wenigstens ein Federelement in einem ausgewählten Bereich gequetscht wird und ein gequetschter Bereich (13, 35, 55) erzeugt wird, wobei ein Maß der Quetschung die Höhe des gewünschten Verschwenkmoments oder der gewünschten Anpresskraft des Wischarmes gegen die Fahrzeugscheibe bestimmt.

8. Verfahren nach Anspruch 7, **dadurch gekennzeichnet, dass** der gequetschte Bereich (13, 35, 55) am Ende eines Federelements eingebracht wird.

## Claims

1. Device (10, 30, 50) for swinging a wiper arm of a windscreen wiper assembly away from and against a motor vehicle windscreen, wherein the device (10, 30, 50) has at least two spring elements (11, 31, 32, 51, 52) which hold the wiper arm in a stable position swung away from the vehicle windscreen and which press the wiper arm against the vehicle windscreen in the wiping mode, **characterized in that** the device (10, 30, 50) is punched out in the form of a single part from sheet metal, wherein at least one of the at least two spring elements (11, 31, 32, 51, 52) has a squeezed region (13, 35, 55) in a selected region in order to produce a pivoting torque required for the functioning of the device, wherein the selected region is located in the end region of the spring element, wherein the end regions of the two spring elements are connected to each other via a connecting element (12, 54).

2. Device (10) according to Claim 1, **characterized in that** it has two spring elements (11) which are arranged next to each other and are connected to each other in each case at the end regions thereof by connecting elements (12), wherein at least one end region (13) of the device (10) and in each case a subregion of the connecting elements (12) are squeezed.

3. Device (30) according to Claim 1, **characterized in that** it has three spring elements (31, 32) arranged next to one another, wherein a central spring element (32) is provided with at least one squeezed end region (35).

4. Device (50) according to Claim 1, **characterized in that** it has three spring elements (51, 52) arranged next to one another, wherein two spring elements (51) which are arranged on the outside are provided with at least one squeezed end region (55).

5. Wiper arm for a windscreen wiper assembly of a motor vehicle, **characterized in that** it has a device (10, 30, 50) according to one of Claims 1 to 4.

6. Windscreen wiper assembly for a motor vehicle, **characterized in that** it has at least one wiper arm according to Claim 5.

7. Method for producing a device (10, 30, 50) for swinging a wiper arm of a windscreen wiper assembly away from and against a motor vehicle windscreen, wherein the device (10, 30, 50) has at least two spring elements (11, 31, 32, 51, 52) which are suitable for holding the wiper arm in a stable position swung away from the vehicle windscreen and for pressing the wiper arm against the vehicle windscreen during the wiping mode, **characterized in that** the device (10, 30, 50) is punched out in the form of a single part from sheet metal, wherein the spring elements are fixedly connected at both ends to the connecting elements connecting the spring elements, wherein at least one spring element is squeezed in a selected region, and a squeezed region (13, 35, 55) is produced, wherein the squeezing degree determines the level of the desired pivoting torque or of the desired contact pressure force of the wiper arm against the vehicle windscreen.

8. Method according to Claim 7, **characterized in that** the squeezed region (13, 35, 55) is placed at the end of a spring element.

## Revendications

1. Dispositif (10, 30, 50) destiné à rabattre et à appliquer un bras de monture d'essuie-glace de système d'essuie-glace sur une vitre d'un véhicule à moteur, le dispositif (10, 30, 50) comportant au moins deux éléments de ressort (11, 31, 32, 51, 52) maintenant le bras de monture d'essuie-glace dans une position stable rabattue vers l'extérieur par rapport à la vitre de véhicule et comprimant le bras de monture d'essuie-glace contre la vitre de véhicule dans le mode de fonctionnement d'essuyage, **caractérisé en ce que** le dispositif (10, 30, 50) prend la forme d'une pièce unique estampée hors d'une tôle, au moins un des au moins deux éléments de ressort (11, 31, 32, 51, 52) comportant une zone coincée (13, 35, 55) dans une zone sélectionnée, en vue de produire un couple de pivotement nécessaire au fonctionnement du dispositif, la zone sélectionnée se situant dans la zone d'extrémité de l'élément de ressort, les zones de deux éléments de ressort étant reliées entre elles par le biais d'un élément de liaison (12, 54).

2. Dispositif (10) selon la revendication 1, **caractérisé en ce qu'**il comporte deux éléments de ressort (11) placés côte à côte respectivement reliés entre eux au niveau de leurs zones d'extrémité par le truchement des éléments de liaison (12), au moins une zone d'extrémité (13) du dispositif (10) et respectivement une zone partielle des éléments de liaison (12) étant coincées l'une par rapport à l'autre.

3. Dispositif (30) selon la revendication 1, **caractérisé en ce qu'**il comporte trois éléments de ressort (31, 32) placés côte à côte, un élément de ressort (32) central étant pourvu d'au moins une zone d'extrémité (35) coincée entre.

4. Dispositif (50) selon la revendication 1, **caractérisé en ce qu'**il comporte trois éléments de ressort (51, 52) disposés côte à côte, deux éléments de ressort (51) disposés à l'extérieur étant pourvus d'au moins une zone (55) coincée entre.

5. Bras de monture d'essuie-glace de système d'essuie-glace de véhicule à moteur, **caractérisé en ce qu'**il comporte un dispositif (10, 30, 50) selon l'une quelconque des revendications 1 à 4.

6. Système d'essuie-glace pour un véhicule à moteur, **caractérisé en ce qu'**il comporte au moins un bras de monture d'essuie-glace selon la revendication 5.

7. Procédé pour produire un dispositif (10, 30, 50) destiné à rabattre et à appliquer un bras de monture d'essuie-glace de système d'essuie-glace sur une vitre d'un véhicule à moteur, le dispositif (10, 30, 50) comportant au moins deux éléments de ressort (11, 31, 32, 51, 52) adaptés pour maintenir le bras de monture d'essuie-glace dans une position stable rabattue vers l'extérieur par rapport à la vitre de véhicule et comprimer le bras de monture d'essuie-glace contre la vitre de véhicule dans le mode de fonctionnement d'essuyage, **caractérisé en ce que** le dispositif (10, 30, 50) prend la forme d'une pièce unique estampée hors d'une tôle, les éléments de ressort étant reliés fixement au niveau des deux extrémités aux éléments de liaison reliant les éléments de ressort, au moins un élément de ressort étant coincé dans une zone sélectionnée, produisant ainsi une zone coincée (13, 35, 55), l'ampleur du coincement déterminant la grandeur du couple de pivotement souhaité ou la force de compression souhaitée du bras de monture d'essuie-glace contre la vitre de véhicule dans le mode de fonctionnement d'essuyage.

8. Procédé selon la revendication 7, **caractérisé en ce que** la zone coincée (13, 35, 55) est amenée au niveau de l'extrémité d'un élément de ressort.
